## Europäisches Patentamt
(19) **European Patent Office**

Office européen des brevets

(11) Publication number : **0 257 026 B1**

(12) **EUROPEAN PATENT SPECIFICATION**

(45) Date of publication of patent specification :
10.04.91 Bulletin 91/15

(51) Int. Cl.⁵ : **B23P 19/02**

(21) Application number : **86901652.7**

(22) Date of filing : **18.02.86**

(86) International application number :
**PCT/US86/00340**

(87) International publication number :
**WO 87/04958 27.08.87 Gazette 87/19**

(54) **TOOLS FOR DISASSEMBLING UNIVERSAL JOINTS.**

(43) Date of publication of application :
02.03.88 Bulletin 88/09

(45) Publication of the grant of the patent :
10.04.91 Bulletin 91/15

(84) Designated Contracting States :
**AT BE CH DE FR GB IT LI LU NL SE**

(56) References cited :
WO-A-82/04415
FR-A- 966 270
US-A- 2 566 847
US-A- 2 706 849
US-A- 2 950 525
US-A- 2 978 167
US-A- 3 008 226
US-A- 3 069 761
US-A- 3 076 259
US-A- 3 217 394

(56) References cited :
US-A- 3 337 943
US-A- 3 339 263
US-A- 3 846 891
US-A- 3 908 258
US-A- 4 019 233
US-A- 4 129 931
US-A- 4 240 191
US-A- 4 437 220

(73) Proprietor : LOSTRA, John M.
Post Office Box 841
Elko, NV 89801 (US)

(72) Inventor : LOSTRA, John M.
Post Office Box 841
Elko, NV 89801 (US)

(74) Representative : Wilson, Nicholas Martin et al
WITHERS & ROGERS 4 Dyer's Buildings
Holborn
London EC1N 2JT (GB)

Jouve, 18, rue Saint-Denis, 75001 PARIS

EP 0 257 026 B1

## Description

### Technical Field

The present invention relates to tools for disassembling universal joints, and more specifically to two different types of tools – a pull-type tool and a push-type tool – for disassembling universal joints of vehicles.

### Background Art

There are various situations in which it is necessary to disassemble the universal joint of the drive shaft of a vehicle. For example, prior to towing a vehicle with the drive wheels remaining on the ground, it is necessary to disconnect the transmission from the drive axles to protect the vehicle from damage during towing. This is generally achieved by disconnecting the drive shaft universal joint at the drive axle pinion yoke, or occasionally by pulling the drive axle shafts. However, substantial problems are often encountered when disassembling the universal joint.

Specifically, although new universal joint components are shiny and have accurately machined fits, and can be assembled easily, even when in dry condition, once a vehicle has been used for a year or more without disassembling the drive shaft universal joint, the universal joint soon becomes rusted due to wet roads and/or salty roads, so that the universal joint components become so tightly assembled that it is virtually impossible to disassemble them.

Faced with such a problem, mechanics and towing/wrecker crews often resort to hammering the universal joint components apart, but that is very destructive to the components. In addition, even that technique is often not effective or is difficult to carry out, especially when it has to be done at night on cold, wet roads with merely a flashlight as a light source. The problems are further compounded by the fact that, in towing situations, there is usually very little room in which to work.

In response to the above-discussed problems, a mechanical puller apparatus for disassembling universal joints has been developed, and is disclosed in U.S. Patent No. 4,019,233 – Jirele. The apparatus or tool disclosed in that patent employs a driver screw which is rotated mechanically or manually to exert a downward force on a bridge assembly connected to a first yoke member of the universal joint, while an upward pulling force is exerted on bosses connected to the second yoke member of the universal joint by means of puller arms which are threadably connected to the driver screw.

Small hand pullers of the type described in the aforementioned patent have significant drawbacks. Notably, since such pullers are operated by manual force, their effectiveness varies from user to user, and often they are ineffective to do the job. In addition, such small hand pullers are not effective for the purposes of towing and wrecker crews, in that working, conditions on the road (poor lighting, inclement weather, insufficient working space, and so forth) render manual pullers even less effective.

A further disadvantage of the manual puller described in the aforementioned patent resides in the fact that, in the use of such a "rotating screw" tool, many unwanted reaction forces are produced when the screw is rotated manually, and this interferes with the successful accomplishment of the universal joint disassembly operation. This problem, together with the aforementioned problems of poor working conditions, results in the consumption of excessive time as the user attempts to disassemble the universal joint. Finally, it will be recognized that puller-type tools such as disclosed in the aforementioned patent are bulky, and this is a disadvantage not only from the standpoint of using the tool, but also from the standpoint of transporting the tool to the worksite.

Large, industrial-type tools are available in the marketplace, and are used for pulling assembled components apart, or pushing components out of an assembly. Such large, industrial-type tools often employ electric motors or pneumatic-powered hydraulic power packs, and occasionally handpowered units are employed in conjunction with closed hydraulic circuits. The following U.S. patents disclose such types of hydraulic-powered apparatus or arrangements : 2,807,081 Black ; 3,069,761 – Sommer ; and 3,908,258 – Barty.

However, such powered apparatus or arrangements are burdened by several disadvantages. They are usually very large and bulky, and are therefore not suitable for transport to and from towing or wrecker worksites, and are also not suitable for use under the adverse conditions often encountered by towing and wrecker crews. In addition, such industrial-type powered apparatus often operate under hydraulic power, and accordingly require auxiliary hydraulic sources to power their operation, thus increasing their bulkiness and non-portability. Finally, such apparatus or arrangements as disclosed in the latter three patents are simply not suitable or adaptable for use in the specific application of disassembling universal joints.

Other disassembly or pushing-pulling tools or apparatus, even less applicable to the job of disassembling drive shaft universal joints, are disclosed in the following U.S. patents : 2,950,525 – Duncan et al ; 3,337,943 – Powell ; 3,339,263 – Dodge ; 1,498,933 – Seppmann ; 2,507,003 – Gagne ; 2,566,847 – Miller ; 3,230,617 – Spiess et al ; 3,927,462 – Freeman et al ; and 4,182,011 – Bretzger et al.

To summarize, the state of the prior art in this area of technology is such that it would be considered highly desirable and advantageous to have a tool or apparatus which is specifically designed for the disassembly of drive shaft universal joints, especially under adverse road conditions as usually encountered by towing and wrecker crews. Such drive shaft universal joint disassembly tools should have the following characteristics : they should be portable and easily transportable to the worksite ; they should be powered so as to facilitate their use, especially under conditions of limited space and adverse working conditions ; and they should be powered by some power source normally available to towing and wrecker crews at the worksite.

Disclosure of Invention

According to a first embodiment of the invention there is provided a tool for disassembly of a universal joint, said universal joint comprising a first yoke member having a near end and a far end defining a first yoke axis, a second yoke member having a second yoke axis generally perpendicular to said first yoke axis, and at least one journal bearing mounted in a yoke collar in a given end portion of said first yoke member, said first yoke member and said second yoke member being interconnected by a cross member, said tool comprising :
a cylinder ;
connecting means comprising at least two cap screws to securely fasten said cylinder to said first yoke member at the near end thereof so that a cylindrical axis of said cylinder is aligned with the first yoke axis, said cylinder comprising a cylindrical shell closed at one end remote from the first yoke member ;
a piston movable within said cylinder along said cylindrical axis so that said piston can be moved toward said universal joint ;
support means disposed between said cylinder and said first yoke member, and having a generally flat surface on which said cylinder is positioned, and having contact fingers extending from said generally flat surface on either side of said first yoke member toward said second yoke member so as to contact said cross member on either side of said first yoke member ; and
injection means located in the cylinder for receiving and injecting fluid under high pressure into the cylinder in order to move said piston toward said universal joint so as to bear against said generally flat surface, thereby exerting a pushing force via said contact fingers on said cross member and simultaneously a pulling force via said connecting means on said first yoke member, whereby to move said at least one journal bearing out of said yoke collar in said given end portion of said first yoke member, thus disassembling said universal joint.
Preferably at least two boreholes are provided parallel to the cylindrical axis of the cylinder and within opposite built-up portions along the length of said cylindrical shell, and wherein said first yoke member has at least two threaded holes provided in said near end along axes parallel to said cylindrical axis and in alignment with said at least two boreholes, said at least two cap screws being insertable into respective ones of said at least two boreholes, said at least two cap screws being threaded at distal portions thereof so as to be able to be screwed into respective ones of said at least two threaded holes, whereby to securely fasten said cylinder to said first yoke member for the disassembly operation.
The injection means may comprise at least one of an aperture in the closed end of the cylinder and an aperture running through the cylindrical wall of the cylinder for receiving the nozzle of a grease gun, and wherein the fluid injected under high pressure comprises grease emitted from the grease gun.
According to a second embodiment of the invention there is provided a tool for disassembly of a universal joint, said universal joint comprising first and second yoke members, said first yoke member having a journal bearing mounted in a given end portion thereof, said tool comprising :
pulling means connectable to said second yoke member for exerting a pulling force on said second yoke member during disassembly ;
standoff means connectable to said given end portion of said first yoke member for exerting a pushing force, opposite to said pulling force, on the given end portion of the first yoke member during disassembly ; and
operating means interposed between said pulling means and said standoff means for operating on said pulling means to cause said pulling means to exert said pulling force on said second yoke member, and for operating on said standoff means to cause said standoff means to exert said pushing force on the given end portion of the first yoke member, thereby forcing the journal bearing mounted in said given end portion of said first yoke member out of said given end portion of said first yoke member ;
characterized in that said operating means comprises a cylinder connected to said standoff means and a piston operating on said pulling means, said piston being movable within said cylinder in a direction away from the universal joint in response to the injection of fluid under high pressure into the cylinder so as to urge said pulling means in a direction away from the universal joint ; and
wherein said cylinder is in the form of a cylindrical shell formed around a cylindrical axis of said cylinder, said cylindrical shell having built-up portions running parallel to the cylindrical axis, and wherein at least two boreholes are provided along the length of the cylinder within said built-up portions of said cylindrical shell, said standoff means comprising at least two standoff studs, each being insertable into a respective one of said at least two boreholes.

Preferably the pulling means comprises a headplate positioned against said piston, and a pair of sidebars, a given end of each of said sidebars being connected to said headplate, and a distal end of each of said sidebars being connected to a respective end portion of said second yoke member ; and

wherein said headplate has a recessed portion in a bottom surface of said headplate facing said piston, in which recessed portion said piston is positioned for pushing against said headplate and in a direction away from the universal joint during the disassembly operation, said recessed portion acting to preclude lateral movement of said piton during operation of said tool.

The second yoke member may be provided with retaining cap screws protruding from respective end portions of said second yoke member, said distal end of each of said sidebars being provided with respective retaining cap screw engaging holes into which a respective one of said retaining cap screws fits, thereby connecting said each of said sidebars directly to said respective end portions of said second yoke member without the need of any adapters.

The sidebars may be provided with grooves generally perpendicular to the length of said sidebars and located at an end thereof remote from said respective end portions of said second yoke member, said grooves being dismensioned in accordance with the thickness of said headplate so that respective sides of said headplate fit into the groove in respective ones of said sidebars.

The second embodiment may further include holding means for holding said sidebars and said headplate in a connected relationship during the disassembly operation ; preferably the holding means comprises an O-ring surrounding said sidebars.

The second embodiment may further include at least two standoff studs have threaded ends which are insertable into corresponding threaded holes in said given end portion of said first yoke member.

Advantages of the present invention are as follows. Both embodiments of the invention comprise a compact tool, highly portable in nature, for disassembling the universal joint of the drive shaft of a vehicle utilizing a technique involving the injection of a high-pressure fluid, such as grease from a grease gun, into a cylinder so as to drive a piston to create either a pulling force (via the use of a headplate and sidebars) or a pushing force (via the use of a support assembly) for ejecting a journal bearing from an end portion of a yoke member of the universal joint. Thus, the present invention provides two embodiments of a universal joint disassembly tool, both of which embodiments have the advantage of portability usually associated with manually driven tools, as well as the further advantage of high-pressure operation usually associated with large industrial-type pulling or pushing apparatus.

Furthermore, it should be noted that the two embodiments of the universal joint disassembly tool have several elements or components in common (such as the piston and cylinder), so that a relatively small and highly portable tool kit can be devised while providing the user with the advantages of both embodiments (both the pull-type and push-type tools).

Therefore, it is a primary object of the present invention to provide tools for the disassembly of a drive shaft universal joint of a vehicle.

It is an additional object of the present invention to provide tools for the disassembly of a universal joint, wherein the tools operate in response to the injection of fluid under high pressure into the tool.

It is an additional object of the present invention to provide tools for the disassembly of a universal joint, wherein the tools are composed of a compact arrangement of elements resulting in a high degree of portability.

It is an additional object of the present invention to provide tools for the disassembly of a universal joint, wherein the tools comprise pull -type tools which exert a pulling force on the universal joint, while exerting a pushing force on an end portion of that one of the yoke members of the universal joint from which a journal bearing is to be removed.

It is an additional object of the present invention to provide tools for the disassembly of a universal joint, wherein the tools comprise push-type tools which exert a pushing force on the universal joint from which the journal bearing is to be removed.

The above and other objects that will hereinafter appear, and the nature of the invention, will be more clearly understood by reference to the following description, the appended claims, and the accompanying drawings.

## Brief Description of Drawings

FIGURE 1 is a perspective view of a first embodiment of the present invention, comprising a pull-type tool.

FIGURE 2 is a cross-sectional view of the cylinder of the present invention, as seen along line A-A' in FIGURE 1.

FIGURE 3 is a front view of the first embodiment of the present invention, as utilized during a first step of disassembling a universal joint.

FIGURE 4 is a front view of the first embodiment of the present invention, as utilized during a second step of disassembling a universal joint.

FIGURE 5 is a bottom view of the headplate shown in FIGURE 3.

FIGURE 6 is a perspective view of a second embodiment of the invention, comprising a push-type tool.

FIGURE 7 is a cross-sectional view of the cylinder, as seen along section line B-B′ in FIGURE 6.

## Best Mode for Carrying Out the Invention

The present invention will now be more fully described with reference to the various figures of the drawings.

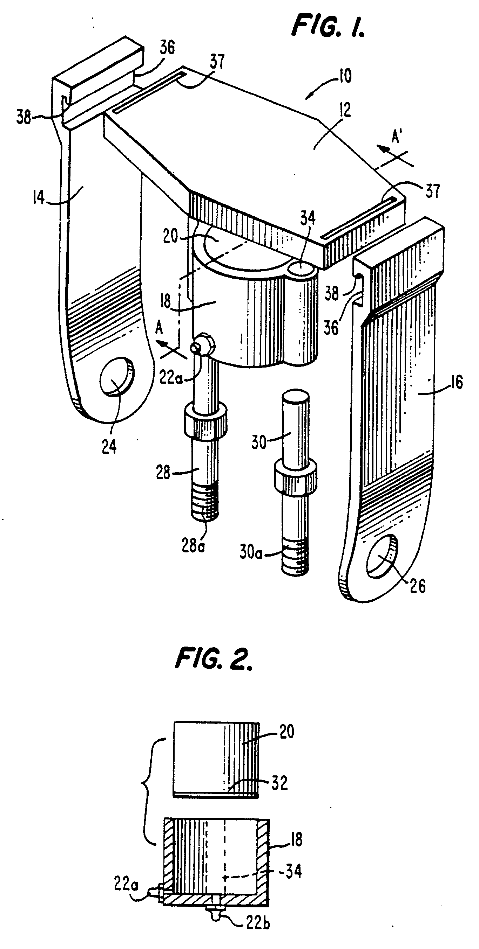

FIGURE I is a perspective view of a first embodiment of the invention, comprising a pull-type tool for disassembly of a universal joint. As seen therein, the pull-type tool 10 comprises a headplate 12, sidebars 14 and 16, a cylinder 18, a piston 20, a filler plug 22a, and standoff studs 28 and 30. As also seen in FIGURE 1, sidebars 14 and 16 are provided with grooves 36 at the top portions thereof, the grooves 36 functioning to accommodate end portions of the headplate 12, while the end portions of the headplate 12 are provided with slots 37, into which downwardly protruding portions 38 of the end portions of the sidebars 14 and 16 are inserted when assembling the tool 10. Sidebars 14 and 16 are further provided, at their distal ends, with holes 24 and 26, the latter being designed to accommodate cap screws (to be discussed below) on the universal joint. In addition, standoff studs 28 and 30 are dimensioned so as to be insertable into boreholes 34 provided in opposing portions of the cylindrical wall of the cylinder 18, while standoff studs 28 and 30 are provided at their other ends with threaded portions 28a and 30a, respectively, the latter being provided so that the standoff studs 28 and 30 can be screwed into respective boreholes (to be discussed below) in an end portion of the yoke member, from which the journal bearing is to be removed, in the universal joint.

FIGURE 2 is a cross-sectional view of the cylinder 18 of FIGURE 1, taken along the section line A-A′ thereof. As seen in FIGURE 2, the inner dimensions of the cylinder 18 are such as to accommodate a piston 20. An O-ring grease seal or grease fitting 32 is positioned prior to inserting the piston 20 into the cylinder 18. Cylinder 18 is also provided with filler plugs 22a and 22b. As seen in FIGURE 2, opposing portions of the cylindrical wall of the cylinder 18 are provided with boreholes 34, into which standoff studs 28 and 30 can be inserted.

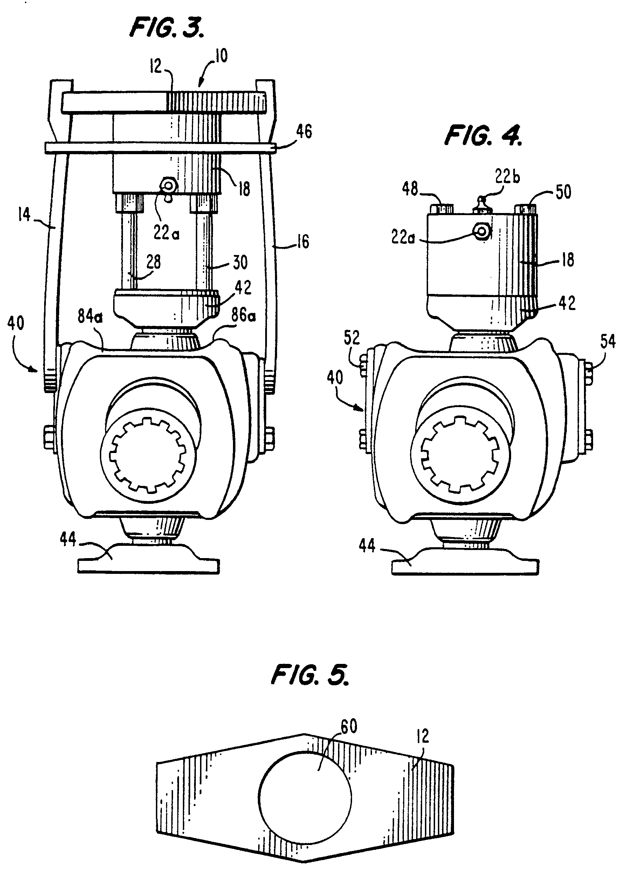

FIGURE 3 is a front view of the pull-type tool 10 of FIGURE 1, as assembled for operation in the disassembly of the universal joint. As seen in FIGURE 3, the universal joint 40 comprises a pair of yoke members generally perpendicular to each other, with the end portions of a first yoke member being indicated by reference numerals 42 and 44.

As is well-known to those of skill in the art, such universal joints contain journal bearings (not shown), each journal bearing disposed adjacent to or in a respective end portion (such as end portions 42 and 44) of the universal joint. The operation of disassembling a universal joint, using the pull-type tool 10, will now be described with reference to FIGURE 3.

As a first step in such a disassembly operation, the pull-type tool 10 is utilized to remove the journal bearing (not shown) contained in end portion 42, of the vertical yoke of universal joint 40. The two standoff studs 28 and 30 are screwed into boreholes in the end portion 42 of the yoke, and the cylinder 18 is slipped over the upper portions of the standoff studs 28 and 30 by inserting those upper portions into the boreholes 34 contained in the cylinder wall of cylinder 18.

With reference to FIGURE 5, which is a bottom view of the headplate 12, it is seen that headplate 12 contains a recessed portion or shallow bore 60 in its bottom face, so that the headplate 12 can be placed on top of the cylinder 18, it being noted that the cylinder 18 is positioned with its open end facing upward. A pull yoke assembly is now formed by placing sidebars 14 and 16 in engagement with the left and right end portions of the horizontal yoke of universal joint 40, as shown in FIGURE 3. This is accomplished by slipping sidebars 14 and 16, and specifically the holes 24 and 26 (FIGURE 1) therein, over retaining cap screws 52 and 54, which are best seen in FIGURE 4. The upper portions of sidebars 14 and 16 are then engaged with the end portions of headplate 12, as previously discussed above with reference to the grooves 36, slots 37 and downwardly protruding portions 38 of sidebars 14 and 16, as best seen in FIGURE 1. Finally, the entire assembly is held together for convenience in handling with an appropriately sized O-ring 46.

The nozzle of a conventional grease gun is placed on filler plug 22a or 22b, so that grease pressure can be applied to the interior of the cylinder 18. This pressure causes the piston 20 to rise inside of cylinder 18, exerting a lifting force on the headplate 12, and thus on the sidebars 14 and 16, as well as the horizontal yoke attached thereto. This, in turn, causes a lifting force to be applied to the journal bearing contained within the upper yoke collar 42.

In the meantime, standoff studs 28 and 30, disposed between the cylinder 18 and the upper yoke collar 42, exert a downward force on the upper yoke collar 42. As a result, the journal bearing contained in the upper yoke collar 42 slips out into the space beneath the cylinder 18 and between the standoff studs 28 and 30. Headplate 12, sidebars 14 and 16, cylinder 18 and studs 28 and 30 can be removed, and the bearing is picked off. At this point, the journal end of the universal joint cross in the vertical yoke of FIGURE 3 is exposed.

FIGURE 4 is a front view of the pull-type tool, as utilized in a second step in the disassembly process, that is, the step of removing the journal bearing (not shown) contained in the lower yoke collar 44 of universal joint 40. After the first step is completed, power cylinder 18 is emptied by taking out filler plug 22a or 22b (FIGURE 2) and pushing the piston 20 back in the bore of cylinder 18. The filler plug 22a or 22b and piston 20 are then reinstalled, and cylinder 18 is then placed, with its open end downward, on the upper yoke collar 42, and is fastened thereto using cap screws 48 and 50. At this point, the piston 20 is contacting the exposed journal end of the universal joint cross.

The nozzle of a conventional grease gun is inserted into filler plug 22a or 22b, and grease pressure is once again applied to the interior of cylinder 18, causing piston 20 to move downward, forcing the journal bearing in lower yoke collar 44 to be pushed out of its bore. At this point, with both bearings removed, the universal joint cross, which is attached to the other yoke (the horizontal yoke in the figures), and that end of the drive shaft, can now be taken off the drive pinion yoke.

For total disassembly of the universal joint with the present invention, two conventional hook adapters of appropriate fit can be placed over the bare ends of the universal joint cross, the latter being well-known to those of skill in the art, and the arrangements of FIGURES 3 and 4 can be again employed in a two-step process to remove journal bearings from the end portions of the other yoke (the horizontal yoke).

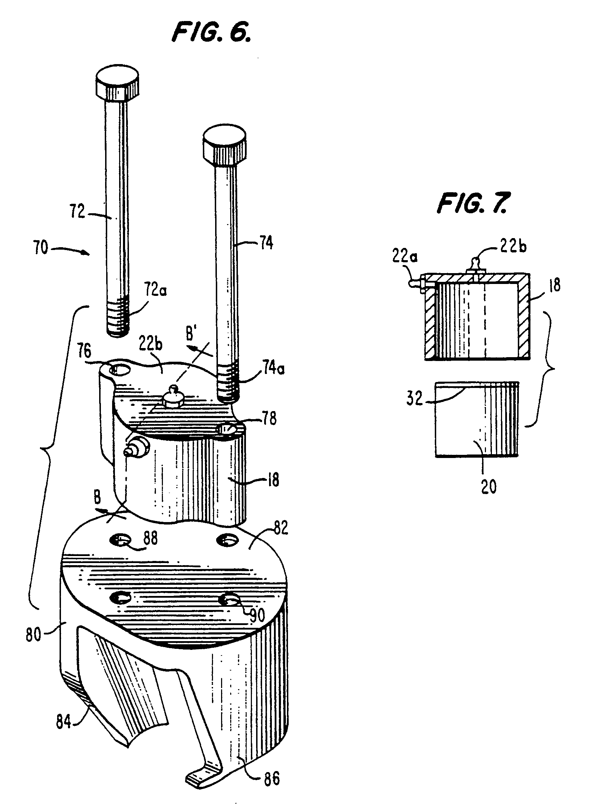

FIGURE 6 is a perspective view of the second embodiment of the present invention, and specifically a perspective view of a push-type tool for disassembling the universal joint of the drive shaft of a vehicle. As seen in FIGURE 6, the pushtype tool 70 comprises a cylinder 18 and associated piston (not shown in FIGURE 6, but shown by reference numeral 20 in FIGURE 7), a pair of cap screws 72 and 74, and a pushing assembly 80 having a flat surface 82 and pushing or contact fingers 84 and 86 extending downward from the flat surface 82. As was the case in the previous figures, the wall of cylinder 18 is provided with boreholes 76 and 78, through which cap screws 72 and 74 are inserted. In addition, further holes 88 and 90 are provided in the flat surface 82 of pushing assembly 80 to accommodate the portions of cap screws 72 and 74 protruding from the cylinder 18. Furthermore, cap screws 72 and 74 are provided, at their distal ends, with threaded portions 72a and 74a, such threaded portions being provided so that cap screws 72 and 74 are able to be screwed into corresponding threaded holes provided in the upper yoke collar (such as upper yoke collar 42 of universal joint 40 in FIGURE 3), so as to fasten the entire assembly, comprising cylinder 18 and pushing assembly 80, to the universal joint.

FIGURE 7 is a cross-sectional view of the cylinder 18, as taken along section line B-B' of FIGURE 6. Again, as was the case previously, cylinder 18 is equipped with filler plugs 22a and 22b, and the interior bore of cylinder 18 is designed to accommodate piston 20. Element 32 is an O-ring grease seal which stays on the piston 20.

In preparation for the disassembly operation using push-type tool 70, the cylinder 18 and piston 20 are mounted on the flat surface 82 of pushing assembly 80, using cap screws 72 and 74 inserted through holes 76 and 78, respectively, in the cylinder 18, and through holes 88 and 90, respectively, in the pushing assembly 80. The entire assembly is then placed over that yoke collar of the universal joint opposite to the yoke collar which contains the first journal bearing to be removed. That is to say, referring back to the universal joint 40 shown in FIGURE 3, the push-type tool 70 would be placed over upper yoke collar 42 so that the fingers 84 and 86 would contact the universal joint 40 at points 84a and 86a, respectively, in FIGURE 3 (that is, at its cross). In addition, the piston 20 would be in cylinder 18 which is indirectly connected to upper yoke collar 42 via screws 72 and 74.

In operation, the nozzle of a conventional grease gun is inserted onto filler plug 22a or 22b, and grease pressure is applied to the interior of cylinder 18, forcing piston 20 downward so as to exert a pushing force, via pushing assembly 80 (FIGURE 6), on the "cross" of the universal joint, causing a reactive pulling force to be exerted, via screws 72 and 74, on upper yoke collar 42 (FIGURE 3). In this manner, the journal bearing contained in lower yoke collar 44 is pushed out of the opposite side of universal joint 40. The push-type tool 70 is then removed from contact with the universal joint 40, and the journal end of the universal joint cross is exposed.

Either filler plug 22a or 22b is removed from the cylinder 18, the cylinder 18 is emptied by pushing the piston back into its bore, and then the filler plug 22a or 22b is reinstalled in cylinder 18.

As a second step, the journal bearing contained in upper yoke collar 42 of universal joint 40 (FIGURE 3) can be removed by reassembling the push-type tool 70, and fastening it to the lower yoke collar 44 using cap screws 72 and 74 as previously described. Grease pressure is then applied to the interior of cylinder 18 through filler plug 22a or 22b, and the journal bearing in upper yoke collar 42 will be pushed out. The universal joint cross can now be removed from the universal joint 40.

For a drive shaft disconnect, this is all that would have to be done, as would be well appreciated by those of skill in the art. However, as will be equally appreciated, for a total universal joint disassembly, steps one and two outlined above would be repeated for the left and right yoke collars of the horizontal yoke of universal joint 40 as seen in FIGURE 3.

It will be further recognized by those of skill in the art that, in accordance with the operation of the push-type tool as just described above, if it is considered preferable, the first step could be repeated four times, once for each yoke collar of each yoke member of the universal joint.

While particular embodiments of the invention have been described in detail and shown in the accompanying drawings, it will be evident that various modifications are possible without departing from the scope of the invention as the same will now be understood by those skilled in the art and as defined in the appended claims.

## Claims

1. A tool (70) for disassembly of a universal joint (40), said universal joint (40) comprising a first yoke member having a near end (42) and a far end (44) defining a first yoke axis, a second yoke member having a second yoke axis generally perpendicular to said first yoke axis, and at least one journal bearing mounted in a yoke collar (44) in a given end portion of said first yoke member, said first yoke member and said second yoke member being interconnected by a cross member (84a, 86a), said tool comprising :

a cylinder (18) ;

connecting means comprising at least two cap screws (72, 74) to securely fasten said cylinder (18) to said first yoke member at the near end (42) thereof so that a cylindrical axis of said cylinder (18) is aligned with the first yoke axis, said cylinder (18) comprising a cylindrical shell closed at one end remote from the first yoke member ;

a piston (20) movable within said cylinder (18) along said cylindrical axis so that said piston (20) can be moved toward said universal joint (40) ;

support means (80) disposed between said cylinder (18) and said first yoke member, and having a generally flat surface (82) on which said cylinder (18) is positioned, and having contact fingers (84, 86) extending from said generally flat surface (82) on either side of said first yoke member toward said second yoke member so as to contact said cross member (84a, 86a) on either side of said first yoke member ; and

injection means (22a, 22b) located in the cylinder (18) for receiving and injecting fluid under high pressure into the cylinder (18) in order to move said piston (20) toward said universal joint (40) so as to bear against said generally flat surface (82), thereby exerting a pushing force via said contact fingers (84, 86) on said cross member (84a, 86a) and simultaneously a pulling force via said connecting means on said first yoke member, whereby to move said at least one journal bearing out of said yoke collar (44) in said given end portion of said first yoke member, thus disassembling said universal joint (40).

2. The tool of claim 1, wherein at least two boreholes (76, 78) are provided parallel to the cylindrical axis of the cylinder (18) and within opposite built-up portions along the length of said cylindrical shell, and wherein said first yoke member has at least two threaded holes provided in said near end (42) along axes parallel to said cylindrical axis and in alignment with said at least two boreholes (76, 78), said at least two cap screws (72, 74) being insertable into respective ones of said at least two boreholes (76, 78), said at least two cap screws (72, 74) being threaded at distal portions (72a, 74a) thereof so as to be able to be screwed into respective ones of said at least two threaded holes, whereby to securely fasten said cylinder (18) to said first yoke member for the disassembly operation.

3. The tool of claim 1 or 2, wherein said injection means (22a, 22b) comprises at least one of an aperture (22b) in the closed end of the cylinder (18) and an aperture (22a) running through the cylindrical wall of the cylinder (18) for receiving the nozzle of a grease gun, and wherein the fluid injected under high pressure comprises grease emitted from the grease gun.

4. A tool (10) for disassembly of a universal joint (40), said universal joint (40) comprising first and second yoke members, said first yoke member having a journal bearing mounted in a given end portion (42) thereof, said tool comprising :

pulling means (12, 14, 16) connectable to said second yoke member for exerting a pulling force on said second yoke member during disassembly ;

standoff means (28, 30) connectable to said given end portion (42) of said first yoke member for exerting a pushing force, opposite to said pulling force, on the given end portion (42) of the first yoke member during disassembly ; and

operating means (18, 20) interposed between said pulling means (12, 14, 16) and said standoff means (28, 30) for operating on said pulling means (12, 14, 16) to cause said pulling means (12, 14, 16) to exert said pulling force on said second yoke member, and for operating on said standoff means (28, 30) to cause said standoff means (28, 30) to exert said pushing force on the given end portion (42) of the first yoke member, thereby forcing the journal bearing mounted in said given end portion (42) of said first yoke member out of said given end portion (42) of said first yoke member ;

characterized in that said operating means (18, 20) comprises a cylinder (18) connected to said standoff means (28, 30) and a piston (20) operating on said pulling means (12, 14, 16), said piston (20) being movable within said cylinder (18) in a direction away from the universal joint (40) in response to the injection of fluid under high pressure into the cylinder (18) so as to urge said pulling means (12, 14, 16) in a direction away from the universal joint (40) ; and
wherein said cylinder (18) is in the form of a cylindrical shell formed around a cylindrical axis of said cylinder (18), said cylindrical shell having built-up portions running parallel to the cylindrical axis, and wherein at least two boreholes (76, 78) are provided along the length of the cylinder (18) within said built-up portions of said cylindrical shell, said standoff means (28, 30) comprising at least two standoff studs (28, 30), each being insertable into a respective one of said at least two boreholes (76, 78).

5. The tool of claim 4, wherein said pulling means (12, 14, 16) comprises a headplate (12) positioned against said piston (20), and a pair of sidebars (14, 16), a given end of each of said sidebars (14, 16) being connected to said headplate (12), and a distal end of each of said sidebars (14, 16) being connected to a respective end portion of said second yoke member ; and
wherein said headplate (12) has a recessed portion (60) in a bottom surface of said headplate (12) facing said piston (20), in which recessed portion (60) said piston (20) is positioned for pushing against said headplate (12) and in a direction away from the universal joint (40) during the disassembly operation, said recessed portion (60) acting to preclude lateral movement of said piston (20) during operation of said tool.

6. The tool of claim 5, wherein said second yoke member is provided with retaining cap screws (52, 54) protruding from respective end portions of said second yoke member, said distal end of each of said sidebars (14, 16) being provided with respective retaining cap screw engaging holes (24, 26) into which a respective one of said retaining cap screws (52, 54) fits, thereby connecting said each of said sidebars (14, 16) directly to said respective end portions of said second yoke member without the need of any adapters.

7. The tool of claim 6, wherein said sidebars (14, 16) are provided with grooves (36) generally perpendicular to the length of said sidebars (14, 16) and located at an end thereof remote from said respective end portions of said second yoke member, said grooves (36) being dimensioned in accordance with the thickness of said headplate (12) so that respective sides of said headplate (12) fit into the groove (36) in respective ones of said sidebars (14, 16).

8. The tool of any of claims 5-7, further comprising holding means (46) for holding said sidebars (14, 16) and said headplate (12) in a connected relationship during the disassembly operation.

9. The tool of claim 8, wherein said holding means (46) comprises an O-ring surrounding said sidebars (14, 16).

10. The tool of any of claims 4-9, wherein said at least two standoff studs (28, 30) have threaded ends which are insertable into corresponding threaded holes in said given end portion (42) of said first yoke member.

## Ansprüche

1. Vorrichtung zum Zerlegen eines Kreuzgelenks (40), das ein erstes Gelenkglied (Jochglied) mit einem nahen Ende (42) und einem entfernten Ende (44), wodurch eine erste Gelenkachse definiert ist,
und ein zweites Gelenkglied entsprechend einer zweiten Gelenkachse senkrecht zu der ersten Gelenkachse, und wenigstens ein Achslager in einem Kragen des ersten Gelenkgliedes aufweist, wobei das erste Gelenkglied und das zweite Gelenkglied durch ein Querglied (84a, 86a) miteinander verbunden sind, gekennzeichnet durch folgende Bestandteile :
ein Zylinder (18) ;
Verbindungsmittel mit wenigstens bzw. in Form von wenigstens zwei Kopfschrauben (72, 74) zur Befestigung des Zylinders (18) an dem nahen Ende (42) des ersten Gelenkgliedes, so daß die Achse des Zylinders ausgerichtet ist mit dem ersten Gelenkglied, wobei der Zylinder an seinem von dem ersten Gelenkglied entfernten Ende geschlossen ist, d. h. mit einem Zylinderboden versehen ist ;
einen in dem Zylinder – und damit gegenüber dem Kreuzgelenk (40) beweglichen Kolben (20) ;
Halte- bzw. Stützmittel (80) zwischen dem Zylinder (18) und dem ersten Gelenkglied mit einer flachen Oberfläche (82), an der der Zylinder (18) positioniert ist, und mit Kontaktfingern (84, 86), die sich von der flachen Oberfläche (82) beidseits des ersten Gelenkgliedes zu dem zweiten Gelenkglied erstrecken, so daß die Finger (84, 86) das Querglied (84a, 86a) beidseits des ersten Gelenkgliedes berühren ;
und Injektionsmittel (22a, 22b) zum Eingeben eines Injektionsfluides unter hohem Druck in den Zylinder (18) zur Bewegung des Kolbens (20) zu dem Kreuzgelenk (40) gegen die flache Oberseite (82), wodurch über die Kontaktfinger (84, 86) eine Schubkraft auf das Querglied (84a, 86a) und gleichzeitig eine Zugkraft über die Verbindungsmittel (Kopfschrauben 72, 74) auf das erste Gelenkglied ausgeübt wird,
wodurch das (wenigstens eine) Zapflager aus dem Kragen (44) in dem einen Endteil des ersten Gelenkgliedes bewegt - und somit das Kreuzgelenk insoweit zerlegt wird.

2. Vorrichtung nach Anspruch 1 dadurch gekennzeichnet, daß der Zylinder (18) wenigstens zwei seitliche Bohrlöcher (76, 78) in einander diametral gegenüberliegenden Längsrippen an der Zylinderwand aufweist, und daß das erste Gelenkglied an seinem nahen Ende wenigstens zwei Gewindelöcher in Längsausrichtung mit den seitlichen Bohrungen (76, 78) des Zylinders aufweist, so daß die Kopfschrauben (72, 74) in die Längsbohrungen (76, 78) eingesteckt und in die Gewindelöcher eingeschraubt werden können, wobei der Zylinder (18) fest mit dem ersten Gelenkglied verbunden wird.

3. Vorrichtung nach Anspruch 1 oder 2, dadurch gekennzeichnet, daß die Injektionsmittel (22a, 22b) von einem Anschlußnippel (22a) in dem Boden des Zylinders (18) und einem Anschlußnippel (22b) in der Zylinderwand gebildet sind, zum Ansetzen einer Hand-Schmierpresse, zum Einpressen von Schmierfett als Druck-Fluid.

4. Vorrichtung 10 (Figur 1) zum Zerlegen eines Kreuzgelenks (40) wobei das Kreuzgelenk (40) ein erstes und ein zweites Jochglied aufweist, und in einem Endbereich (42) des ersten Jochgliedes ein Zapflager eingesetzt ist,

und wobei die Vorrichtung folgende Bestandteile aufweist : Zugmittel (12, 14, 16), die mit dem zweiten Jochglied zur Ausübung einer Zugkraft bei der Zerlegung verbindbar sind ; Abstandmittel (28, 30) verbindbar mit dem Endbereich (42) des ersten Jochgliedes zur Ausübung einer Schubkraft entgegengesetzt zu der Zugkraft auf den Endbereich des ersten Jochgliedes ; und Betätigungsmittel (18, 20), die zwischengesetzt sind zwischen die Schubmittel (12, 14, 16) und Abstandmittel (28, 30) zum Ausüben einer Zugkraft auf das zweite Jochglied und einer Druckkraft auf den Endbereich (42) des ersten Jochgliedes, wodurch das Drehlager aus dem Endbereich (42) des ersten Jochgliedes herausgezwungen wird, dadurch gekennzeichnet, daß die Betätigungsmittel (18, 20) einen mit den Abstandmitteln (28, 30) verbundenen Zylinder (18) und einem Kolben (20) zur Betätigung der Zugmittel (12, 14, 16) umfassen, wobei der Kolben (20) innerhalb des Zylinders (18) in Richtung fort von dem Kreuzgelenk (40) mittels eines in den Zylinder eingegebenen Druckmittels beweglich ist, so daß die Zugmittel (12, 14, 16) in eine Richtung fort von dem Kreuzgelenk (40) gedrängt werden ; und daß der Zylinder (18) axiale Längsrippen aufweist, durch welche sich axiale Bohrungen (76, 78) hindurch erstrecken, so daß die Abstandmittel von Abstandbolzen (28, 30) gebildet sind, die jeweils in die Bohrungen (76, 78) einsetzbar sind.

5. Vorrichtung nach Anspruch 4 dadurch gekennzeichnet, daß die Zugmittel (12, 14, 16) eine gegen den Kolben (20) positionierte Kopfplatte (12) und ein paar von seitlichen Stangen (14, 16) aufweisen, wobei ein gegebenes Ende jedes der Seitenstangen (14, 16) mit der Kopfplatte (12) verbunden ist und ein entferntes Ende der Seitenstangen (14, 16) verbindbar ist mit einem entsprechenden Endteil des zweiten Jochgliedes ; und daß die Kopfplatte (12) eine Ausnehmung (16) gegenüber dem Kolben (20) hat, in welcher Ausnehmung (16) der Kolben (20) zwecks Ausübung von Druck in Richtung fort von dem Kreuzgelenk (40) positioniert ist, wobei die Ausnehmung (16) eine seitliche Bewegung des Kolbens (20) während der Betätigung der Vorrichtung ausschließt.

6. Vorrichtung nach Anspruch 5, wobei das zweite Jochglied mit seitlich vorstehenden Kopfschrauben (52, 54) versehen ist, dadurch gekennzeichnet, daß die Seitenstangen (14, 16) an ihren Enden je ein Loch (24, 26) zur Aufnahme der Schraubenköpfe bzw. Muttern (52, 54) aufweisen, wodurch die Seitenstangen (14, 16) direkt mit den Endbereichen des zweiten Jochgliedes verbindbar sind.

7. Vorrichtung nach Anspruch 6, dadurch gekennzeichnet, daß die Seitenstangen oder Seitenplatten (14, 16) an ihrem der Kopfplatte (12) zugewandten Ende je eine Nut (36) zur Anbringung an je einem Rand der Kopfplatte (12) aufweisen.

8. Vorrichtung nach einem der Ansprüche 5-7, gekennzeichnet durch Haltemittel (46) zum Zusammenhalten der Seitenwangen (14, 16) und der Kopfplatte (12).

9. Vorrichtung nach Anspruch 8, dadurch gekennzeichnet, daß die Haltemittel (46) von einem um die Seitenwangen (14, 16) herumgelegten O-Ring gebildet sind.

10. Vorrichtung nach einem der Ansprüche 4-9, dadurch gekennzeichnet, daß die Bolzen (28, 30) an ihren Enden mit Gewinde versehen sind zum Einschrauben in entsprechende Gewindelöcher im Endbereich (42) des ersten Jochgliedes.

**Revendications**

1. Outil (70) pour désassembler un joint de transmission (40), ledit joint de transmission (40) comprenant un premier élément en fourchette ayant une extrémité rapprochée (42) et une extrémité éloignée (44) définissant un premier axe de fourchette, un second élément en fourchette ayant un second axe de fourchette généralement perpendiculaire audit premier axe de fourchette, et au moins un palier d'un tourillon monté dans un collier de fourchette (44) dans une partie terminale donnée du premier élément en fourchette, ledit premier élément en fourchette et ledit second élément en fourchette étant interconnectés par un élément en croix (84a, 86a), ledit outil comprenant :

un cylindre (18),
des moyens de connexion comprenant au moins deux boulons à tête (72, 74) pour fixer de façon sûre ledit cylindre (18) audit premier élément en fourchette à l'extrémité rapprochée (42) de celui-ci de sorte que l'axe cylindrique dudit cylindre (18) est aligné avec le premier axe de fourchette, ledit cylindre (18) étant un manchon cylindrique fermé à une extrémité éloignée du premier élément en fourchette ;

un piston (20) pouvant se déplacer dans ledit cylindre (18) le long dudit axe cylindrique de sorte que ledit piston (20) peut être déplacé en direction dudit joint de transmission (40) ;

des moyens de support (80) disposés entre ledit cylindre (18) et ledit premier élément en fourchette et ayant une surface (82) généralement plane sur laquelle ledit cylindre (18) est placé, et ayant des doigts de contact (84, 86) s'étendant à partir de ladite surface (82) généralement plane de l'un ou l'autre côté dudit premier élément en fourchette vers ledit second élément en fourchette de sorte à contacter ledit élément en croix (84a, 86a) sur l'un ou l'autre côté dudit premier élément en fourchette ; et

un moyen d'injection (22a, 22b) se trouvant dans le cylindre (18) pour recevoir et injecter un fluide sous pression élevée dans le cylindre (18), afin de déplacer ledit piston (20) vers ledit joint de transmission (40), de sorte à reposer contre ladite surface (82) généralement plane et exercer ainsi une force de poussée par l'intermédiaire desdits doigts de contact (84,86) sur ledit élément en croix (84a, 86a) et simultanément une force de traction par l'intermédiaire dudit moyen de connexion sur ledit premier élément en fourchette, pour déplacer ainsi ledit palier d'un tourillon hors dudit collier de fourchette (44) dans ladite partie terminale donnée dudit premier élément en fourchette, désassemblant ainsi ledit joint de transmission (40).

2. Outil selon la revendication 1, dans lequel au moins deux trous forés (76,78) sont prévus parallèlement à l'axe cylindrique du cylindre (18) et dans des parties opposées construites le long de la longueur dudit manchon cylindrique, et dans lequel ledit premier élément en fourchette a au moins deux trous forés prévus dans ladite extrémité rapprochée (42) le long d'axes parallèles à l'axe cylindrique et en alignement avec lesdits deux trous forés (76, 78), lesdits boulons à tête (72, 74) pouvant être insérés dans des trous respectifs desdits deux trous forés (76,78), lesdits deux boulons à tête (72, 74) étant pourvus d'un filet à leurs parties distales (72a, 74a) de sorte à pouvoir être vissés dans des trous respectifs desdits deux trous forés, pour ainsi fixer de façon sûre ledit cylindre (18) audit premier élément en fourchette pour l'opération de désassemblage.

3. Outil selon la revendication 1 ou 2, dans lequel lesdits moyens d'injection (22a, 22b) comprennent au moins une ouverture (22b) dans l'extrémité fermée du cylindre (18) et une ouverture (22a) passant à travers la paroi cylindrique du cylindre (18) pour recevoir la buse d'un canon de graissage, et dans lequel le fluide injecté sous haute pression est de la graisse émise par ledit canon de graissage.

4. Outil (10) pour le désassemblage d'un joint de transmission (44), ledit joint de transmission (44) comprenant des premier et second éléments en fourchette, ledit premier élément en fourchette ayant un palier d'un tourillon monté dans une partie extrême donnée (42) de celui-ci, ledit outil comprenant :

des moyens de traction (12, 14, 16) pouvant être connectés audit second élément en fourchette pour exercer une force de traction sur ledit second élément en fourchette pendant le désassemblage ;

des moyens droits (28, 30) pouvant être connectés à ladite partie extrême donnée (42) dudit premier élément en fourchette pour exercer une force de poussée opposée à ladite force de traction sur la partie extrême donnée (42) dudit premier élément en fourchette pendant le désassemblage ; et

un moyen de commande (18, 20) interposé entre lesdits moyens de traction (12, 14, 16) et lesdits moyens droits (28, 30) pour agir sur lesdits moyens de traction (12, 14, 16) de sorte à faire que lesdits moyens de traction (12, 14, 16) exercent une force de traction sur ledit second élément en fourchette et pour agir sur lesdits moyens droits (28,30) pour faire que lesdits moyens droits (28,30) exercent une force de poussée sur ladite partie extrême donnée (42) dudit premier élément en fourchette, forçant ainsi le palier de tourillon monté dans ladite partie extrême (42) dudit premier élément en fourchette hors de ladite partie extrême donnée (42) dudit premier élément en fourchette ;

caractérisé en ce que lesdits moyens de commande (18, 20) sont formés par un cylindre (18) connecté auxdits moyens droits (28, 30) et un piston (20) agissant sur lesdits moyens de traction (12, 14, 16), ledit piston (20) étant mobile dans ledit cylindre (18) dans une direction s'éloignant du joint de transmission (42) en réponse à l'injection de fluide sous haute pression dans ledit cylindre (18) de sorte à forcer lesdits moyens de traction (12,14,16) dans une direction s'éloignant du joint de transmission (40) ; et

dans lequel ledit cylindre (18) a la forme d'un manchon cylindrique formé autour d'un axe cylindrique dudit cylindre (18), ledit manchon cylindrique ayant des parties construites parallèlement à l'axe cylindrique, et dans lequel au moins deux trous forés (76, 78) sont prévus le long de la longueur du cylindre (18) dans lesdits parties construites dudit manchon cylindrique, lesdits moyens droits (28, 30) étant formés par deux colonnettes droites (28, 30) dont chacune peut être insérée dans un trou respectif des deux trous forés (76, 78).

5. Outil selon la revendication 4, dans lequel lesdits moyens de traction (12,14,16) sont composés d'une plaque de tête (12) positionnée contre ledit piston (20) et une paire de barres latérales (14,16), une extrémité donnée de chacune des barres latérales (14,16) étant connectée à ladite plaque de tête (12) et une extrémité distale de chacune des barres latérales (14,16) étant connectée à une partie terminale respective dudit second élément en fourchette ; et

dans lequel ladite plaque de tête (12) a une partie en retrait (60) dans une surface inférieure de ladite plaque de tête (12) face au piston (20), ledit piston (20) étant positionné dans ladite partie en retrait (60) pour pousser contre ladite plaque de tête (12) et dans une direction s'éloignant du joint de transmission (40) pendant l'opération de désassemblage, ladite partie en retrait (60) agissant pour éviter le mouvement latérale dudit piston (20) pendant l'utilisation de l'outil.

6. Outil selon la revendication 5, dans lequel ledit second élément en fourchette est pourvu de boulons à tête (52, 54) de retenue s'élevant de partie terminale respective dudit second élément en fourchette, l'extrémité distale de chacune desdites barres latérales (14, 16) étant pourvue de trous respectifs (24, 26) engageant les boulons à tête de retenue et dans lequel un boulon respectif desdits boulons à tête (52, 54) de retenue s'insère, connectant ainsi chacune desdites barres latérales (14, 16) directement aux parties terminales respectives dudit second élément en fourchette sans avoir besoin d'adapteur quelconque.

7. Outil selon la revendication 6, dans lequel lesdites barres latérales (14, 16) sont pourvues de rainures (36) généralement perpendiculaires à la longueur desdites barres latérales (14, 16) et disposées à une extrémité de celles-ci éloignées desdites parties terminales respectives dudit second élément en fourchette, lesdites rainures (36) étant dimensionnées en accord avec l'épaisseur de ladite plaque de tête (12) de sorte que des côtés respectifs de ladite plaque de tête s'emboîtent dans ladite rainure dans une desdites barres latérales (14, 16).

8. Outil selon l'une quelconque des revendications 5 à 7, comprenant en outre des moyens de retenue (46) pour retenir lesdites barres latérales (14, 16) et ladite plaque de tête (12) dans une relation connectée pendant l'opération de désassemblage.

9. Outil selon la revendication 9, dans lequel ledit moyen de retenue (46) est un anneau torique entourant les barres latérales (14, 16).

10. Outil selon l'une quelconque des revendications 4 à 9, dans lequel lesdites colonnettes droites (28, 30) ont des extrémités filetées qui peuvent être insérées dans des trous filetés correspondants dans ladite partie terminale (42) donnée dudit premier élément en fourchette.

EP 0 257 026 B1

FIG. I.

FIG. 2.

12

## FIG. 3.

## FIG. 4.

## FIG. 5.

# FIG. 6.

# FIG. 7.